# EUROPÄISCHE PATENTANMELDUNG

(11) **EP 3 620 271 A1**
(43) Veröffentlichungstag der Anmeldung: **11.03.2020**
(21) Anmeldenummer: 19181271.8
(22) Anmeldetag: 19.06.2019
(51) Int. Cl.: B25J 9/16, G05B 19/408, G06F 8/51

(54) **VERFAHREN ZUR PROGRAMMIERUNG EINES ROBOTERS SOWIE RECHENEINRICHTUNG UND COMPUTERPROGRAMM**

(30) Priorität: 27.08.2018 DE 102018214417
(71) Anmelder: Volkswagen AG, 38440 Wolfsburg (DE)
(72) Erfinder: Schwinge, Ralf, 38518 Gifhorn (DE)

(57) **Zusammenfassung**

Der Vorschlag betrifft ein Verfahren zur Programmierung eines Roboters (10) für die Durchführung einer Tätigkeit, wobei der Roboter (10) mit einer programmierbaren Steuereinheit (70) ausgestattet ist. Das Verfahren zeichnet sich dadurch aus, dass die Roboter-Programme mit einem einheitlichen Programm-Generator (60) erstellt werden, wobei der Programm-Generator (60) eine oder mehrere Sequenzen von Schlüsselwörtern in gültigen Programmcode für die programmierbare Steuereinheit (70) umsetzt, derart, dass der Programm-Generator (60) bei der Umsetzung der Schlüsselwörter der jeweiligen Sequenz einen Abruf von Informationen in einem Programmier-Regelwerk durchführt, von dem er den für den jeweiligen Robotertyp passenden Programmcode in der vorgegebenen Syntax zurückerhält und wobei der Programm-Generator (60) die empfangenen Programm-Code-Abschnitte zu einem fertigen Programmcode zusammensetzt.

## Beschreibung

Der Vorschlag betrifft das technische Gebiet der Programmierung von Robotern, Drohnen und anderen programmierbaren Einrichtungen, die eine bestimmte Aufgabe erfüllen sollen. Insbesondere geht es um die automatische Programmierung von Industrie-Robotern, die bei der Fertigung von Produkten eingesetzt werden.

Bei den Fertigungsrobotern geht es darum einzelne oder mehrere Arbeitsschritte durchzuführen. Bei einer komplexen Fertigung, wie z.B. im Karosseriebau von Fahrzeugen, sind viele Arbeitsschritte durchzuführen. Als Beispiele werden genannt, Greifen von Bauteilen, Halten/Positionieren von Bauteilen, Kleben von Bauteilen, Schweißen von Bauteilen, Löten von Bauteilen, Nieten von Bauteilen, Fräsen von Bauteilen, Stanzen von Bauteilen, Prägen von Bauteilen, Tiefziehen von Bauteilen, usw. Für solche Aufgaben gibt es spezialisierte Roboter, z.B. Greif-Roboter, Schweiß-Roboter, Niet-Roboter, Klebe-Roboter, usw. Ausdrücklich wird darauf hingewiesen, dass der Begriff Fertigungsroboter auch diejenigen Roboter mit umfassen soll, die bei der Qualitätssicherung eingesetzt werden. Dabei geht es darum, verschiedene Bauteile/Baugruppen, die bei der Fertigung zusammengesetzt werden, zur Kontrolle zu vermessen. Die hochgenaue Vermessung wird oft von einem Roboter erledigt, der mit einer entsprechenden Messeinrichtung versehen ist.

Die Datenschnittstelle für die Eintragung von SPS-Operanden und Makrobefehlen in das Offline generierte Roboterprogramm ist zur Zeit manuell. Hierdurch ergibt sich eine hohe Fehlerrate mit der Folge von hohem Korrekturaufwand der Roboterprogramme in der Fertigungshalle bei Inbetriebnahme und Anlagenhochlauf. Nach dem Stand der Technik werden die Roboterprogramme manuell an der Anlage korrigiert, teilweise unterstützt durch Prüftools. Bei komplexen Fertigungen werden viele Industrie-Roboter mit einer hohen Zahl unterschiedlicher Applikationsgeräte eingesetzt. Entsprechend hoch ist der Programmieraufwand. Bei manueller Programmerstellung sind auch Fehleingaben unvermeidlich. Wenn den Programmierern die komplette Freiheit gegeben wird, entstehen vielfältige Varianten von Programmen für die gleiche Programmieraufgabe. Diese sind schwer vergleichbar und der jeweils nachfolgende Programmierer hat es schwer die verschiedenen Varianten zu verstehen und weiterzubearbeiten.

Aber auch dann, wenn vielfältige Vorschriften zu beachten sind, hat der Programmierer es schwer. In einem großen Konzern werden die unterschiedlichsten Robotertypen von verschiedenen Roboter-Herstellern eingesetzt, für die es jeweils Spezialvorschriften gibt. Für einen Programmierer ist es nahezu unmöglich alle Vorschriften auswendig zu kennen und all diese Vorschriften zu beachten. Bei der Abnahme der erstellten Programme stellt sich dann oft heraus, dass sie nicht vorschriftmäßig sind und es muss mühsam nachgearbeitet werden, um die Programme in die vorgeschriebene Form zu bringen. Ein hoher Zeitaufwand zur Abarbeitung ist erforderlich, da die Roboter für solche Korrekturen und Tests z.T. nur am Wochenende zur Verfügung stehen. Dann ist auch wieder die Korrekturausführung Programmierer-abhängig mit z.T. erforderlichen Wiederholkorrekturen. Jedenfalls erfordert dies einen erhöhten Personaleinsatz in der Anlaufphase von Fertigungsanlagen.

Insbesondere besteht ein Bedarf nach Vereinheitlichung ohne Interpretationsspielraum bei der Programmierung von Robotern. Dies wurde im Rahmen der Erfindung erkannt.

Die DE 10 2016 216 409 A1 offenbart eine Vorrichtung mit einer Verarbeitungseinrichtung zur Steuerung einer Interaktion zwischen einem Benutzer und einem Hausgerät. Die Verarbeitungseinrichtung ist dazu eingerichtet, den Beginn eines natürlichsprachigen Dialogs zwischen einem Benutzer und der Vorrichtung zu erfassen und das Hausgerät auf Basis des Dialogs zu steuern.

Die DE 10 2016 011 020 A1 offenbart eine Kontaktplan-Überwachungsvorrichtung, die auf einem Monitor eine Betriebssituation eines Kontaktplanprogramms, das auf einer in eine CNC eingebauten programmierbaren Steuerung ausgeführt wird. Ein zu einem Schaltkreis des Kontaktplanprogramms hinzugefügter Kommentar wird mit einem Bereich zum Anzeigen von Informationen über eine Betriebssituation der CNC versehen, die Betriebssituation des Kontaktplanprogramms wird in dem Bereich widergespiegelt, und Anzeigedaten, in denen die Betriebssituation der CNC angezeigt wird, werden angezeigt.

Die DE 296 05 700 U1 offenbart eine Vorrichtung zum Übersetzen von einen Roboter steuernden Programmanweisungen nach DIN 66025, welche in Form von Teileprogrammen vorliegen, die wiederum aus Sätzen von Programmanweisungen gebildet werden.

Die DE 100 21 389 A1 offenbart ein Verfahren zum Steuern eines Systems. Um die Benutzung des Systems zu vereinfachen und zu erleichtern, ist vorgesehen, dass eingegebene Steuerinformation entsprechend zur Verfügung stehender Anwendungseinrichtungen interpretiert wird, und eine Anwendungseinrichtung entsprechend dem Interpretationsergebnis gesteuert wird.

Die EP 1 571 514 A1 offenbart ein System zur Bedienung und Steuerung technischer Prozesse, mit zumindest einer als Mess- und eine Steuergerät ausgebildeten Baugruppe, die mittels elektrischer Leitungen mit Sensoren und Aktoren von Prozessen in Verbindung steht, und mit einem Steuerprogramm, wobei eine Mess- und Steuereinheit, eine Bedien- und Beobachtungsbaugruppe und je eine optional vorgesehene Datenbank, eine Prozessdokumentation sowie ggf. weitere Baugruppen einer Prozessautomatisierung durch Datenkanäle und ein Steuerprogramm miteinander verbunden sind.

Die EP 1 355 208 A1 System zur Automatisierung technischer Prozesse und/oder Versuche, bei dem vorgesehen sind, eine Mess- und eine Steuereinheit, die mittels Mess- und Steuerkanälen mit Sensoren und Aktoren des Prozesses oder der Versuchseinheit in Verbindung stehen, zumindest eine Bibliothek, die Visualisierungsobjekte und Steuermodule enthält, und das System beherrschende Software. Das System ermöglicht es, dem Anwender ohne Kenntnisse von Programmiertechniken Anwendungen zu entwickeln.

Die Erfindung setzt sich zur Aufgabe, einen solchen Ansatz zu finden, durch den die Vereinheitlichung der Programmierung möglich wird. Diese Aufgabe wird durch ein Verfahren zur Programmierung von Robotern gemäß Anspruch 1, eine Recheneinrichtung zur Verwendung bei dem Verfahren gemäß Anspruch 7 und ein Computerprogramm gemäß Anspruch 10 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung besteht in einem Verfahren zur Programmierung eines Roboters für die Durchführung einer Tätigkeit, wobei der Roboter mit einer programmierbaren Steuereinheit ausgestattet ist, auf dem die Roboter-Steuerungsprogramme laufen sollen. Gemäß des Vorschlages werden die Roboter-Programme mit einem einheitlichen Programm-Generator maschinell erstellt, wobei der Programm-Generator eine oder mehrere Sequenzen von Schlüsselwörtern in gültigen Programmcode für die programmierbare Steuereinheit umsetzt. Dies geschieht derart, dass der Programm-Generator bei der Umsetzung mit dem jeweiligen Schlüsselwort der jeweiligen Sequenz einen Abruf von Informationen in einem Programmier-Regelwerk durchführt, von dem es den für den jeweiligen Robotertyp passenden Programmcode in der vorgegebenen Syntax zurückerhält. Der Programm-Generator setzt die empfangenen Programm-Code-Abschnitte zu einem fertigen Programmcode zusammen. Die derartige Abarbeitung der Sequenzen von Schlüsselwörtern ergibt den fertigen Programmcode. Die Sequenz von Schlüsselwörtern kann dabei von dem Programmierer manuell erstellt werden. Zusätzlich muss er für bestimmte Schlüsselwörter noch bestimmte Parameterangaben machen.

Das Verfahren bietet beträchtliche Vorteile für die Programmierung von Robotern. Die Schlüsselwörter selber sind genauestens spezifiziert und der Programmierer entnimmt sie einer Tabelle. Eine Fehlerquelle könnte noch darin bestehen, dass ein falsches Schlüsselwort oder ein falscher Parameter angegeben wird. Die Schlüsselwörter sind aber spezifisch auf das Verständnis der Robotertechnik abgestimmt und dienen, als Platzhalter für Makros und Operanden, insbesondere SPS-Makros und SPS-Operanden und ermöglichen eine funktionsorientierte didaktisch sichere Eingabe in das Roboter-Offline-Programm OLP. Durch einen geeigneten Algorithmus in Verbindung mit dem Programmier-Regelwerk wird aus dem Rohprogramm in Form der Schlüsselwort-Sequenzen ein verwendungsfähiges, standardkonformes Roboterprogramm. All die Fehlerquellen, die bei ausschließlich manueller Programmierung bestehen werden so vermieden.

Durch die Verbindung von didaktisch einfach handhabbaren, funktionalen Schlüsselwörtern mit einem regelbasierten Algorithmus ist eine automatisierte Programmerstellung für Roboteranwendungen möglich.

Mit Einsatz dieses Programmierverfahrens in der Fläche bestehen noch weitere Vorteile:
- es steigt die Geschwindigkeit zur Erstellung von Roboterprogrammen
- alle Anwender programmieren die Programme einheitlich in gleicher Weise
- die Qualität der Programme wird erhöht
- der Aufwand für Nacharbeit sinkt
- individuelle Fehler werden deutlich reduziert
- Anlagenabnahme - die Roboterabnahme kann zu einem früheren Zeitpunkt erfolgen.

Es ist ebenfalls von Vorteil, wenn das Programmier-Regelwerk so ausgelegt wird, dass der Programm-Generator in den Programmcode ein oder mehrere Kommentare zur Beschreibung von Funktionen einfügt. Die Programme werden dadurch lesbarer und besser dokumentiert.

Bei einem großen Konzern gibt es verschiedene Standorte in verschiedenen Ländern. Hier ist es von Vorteil, wenn der OLP-Generator den oder die Kommentare in einer Anzahl von mehreren ausgewählten Sprachen einfügt, so dass sie in den jeweiligen Standorten verstanden werden können.

Es ist weiterhin von Vorteil, wenn das Programmier-Regelwerk als Datenbank ausgeführt wird, die entweder auf dem Rechner, auf dem das Programm für die Steuerung des Roboters erstellt wird, gespeichert wird oder auf einem Zentralrechner installiert wird, der mit dem Rechner verbunden ist. Der Rechner muss nicht in der Nähe des Roboters positioniert werden. Er kann in einem Büro untergebracht werden, wo der Programmierer an dem Offline-Programm arbeitet. Das fertige Programm wird später zu der programmierbaren Steuervorrichtung des Roboters übertragen. Die Datenbank kann entweder lokal auf dem jeweiligen Rechner installiert werden oder auf einem Zentralrechner, an den die Bürorechner angeschlossen sind.

Für das Verfahren sieht eine bevorzugte Ausführungsform vor, dass bei dem Abruf von Informationen in der Datenbank, das Schlüsselwort inklusive Parameterangaben falls vorhanden in einer Anfrage an die Datenbank gesendet wird, das als Index-Information für den Abruf von Informationen in der Datenbank dient. Die Schlüsselwörter adressieren sozusagen die Datenbank. Diese Informationen werden von der Datenbank so verarbeitet, dass sie die fertigen Programmabschnitte zurückliefert. In einer Ausführungsform könnte die Datenbank als Assoziativspeicher CAM (Content Addressed Memory) organisiert werden.

Für eine entsprechende Recheneinrichtung zur Durchführung von Schritten des Verfahrens ist es vorteilhaft, wenn die Recheneinrichtung eine Recheneinheit mit Anschluss an ein Programmier-Regelwerk aufweist, das als Datenbank ausgeführt ist, wobei die Recheneinrichtung eingerichtet ist, eine Sequenz von Schlüsselwörtern, die einen Steuervorgang beschreiben, an die Datenbank zu senden, und von der Datenbank den gültigen Programmcode für die Sequenz von Schlüsselwörtern zurückzuerhalten.

Für eine Recheneinrichtung, die entsprechend ausgelegt wird, um Schritte des Verfahrens durchzuführen, gelten die entsprechenden Vorteile.

Die Datenbank kann in der Recheneinrichtung selbst installiert sein.

Für eine bessere Kontrolle über die Datenbank ist es vorteilhaft, wenn die Recheneinrichtung eingerichtet ist, mit einem externen Zentralrechner zu kommunizieren, auf dem die Datenbank installiert ist.

Die Erfindung lässt sich auch mit einem Computerprogramm realisieren, das ausgelegt ist, bei Abarbeitung in einer Recheneinrichtung, die Schritte des erfindungsgemäßen Verfahrens durchzuführen.

Ausführungsbeispiele der Erfindung sind in den Zeichnungen dargestellt und werden nachfolgend anhand der Figuren näher erläutert.

Es zeigen:
- Fig. 1: eine typische Ansicht eines Fertigungs-Roboters, der für das Greifen eines Bauteiles an einer Position und das Ablegen des Bauteiles an anderer Position spezialisiert ist;
- Fig. 2: eine Konzeptansicht für die Umsetzung der automatischen Programmerstellung;
- Fig. 3: ein Textdokument, das eine Auflistung von den für die Programmierung des Greif-Roboters nötigen Schlüsselwort-Sequenzen enthält;
- Fig. 4a: den ersten Teil eines Textdokuments, das das fertig umgesetzte Programm mit Programmcode für die verschiedenen in Fig. 3 gezeigten Sequenzen enthält; und
- Fig. 4b: den zweiten Teil des Textdokuments, das das fertig umgesetzte Programm mit Programmcode für die verschiedenen in Fig. 3 gezeigten Sequenzen enthält.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

Bei der Fertigung eines komplexen Produktes werden vielfältige, spezialisierte Typen von Fertigungsrobotern eingesetzt. Als Beispiel wird eine Fertigungsstraße einer Fahrzeugkarosserie betrachtet. Dort werden z.B. spezialisierte Roboter für die folgenden Tätigkeiten eingesetzt: Greifen, Positionieren, Ablegen, Fügen, Schweißen, Kleben, Schrauben, Nieten, Löten, Fräsen, Prägen, Durchsetzfügen (Clinchen), Schneiden, Laserschweißen, Befüllen, Messen, usw. Diese Aufzählung ist typisch, erhebt aber keinen Anspruch auf Vollständigkeit. Entsprechend viele spezialisierte Roboter müssen programmiert werden, um die Tätigkeiten punktgenau durchführen zu können.

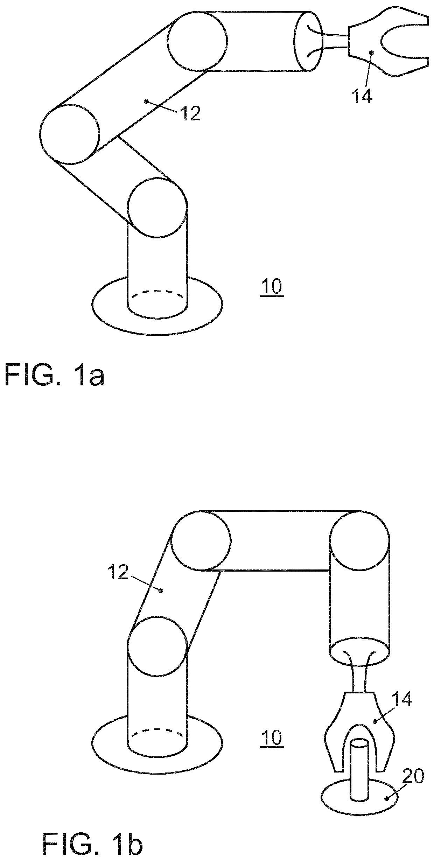

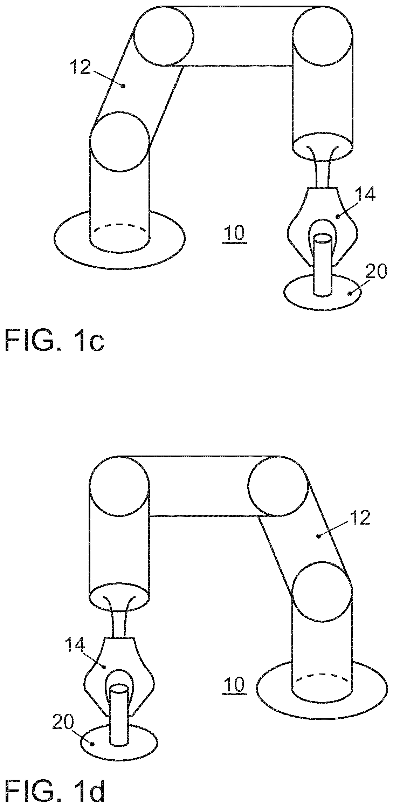

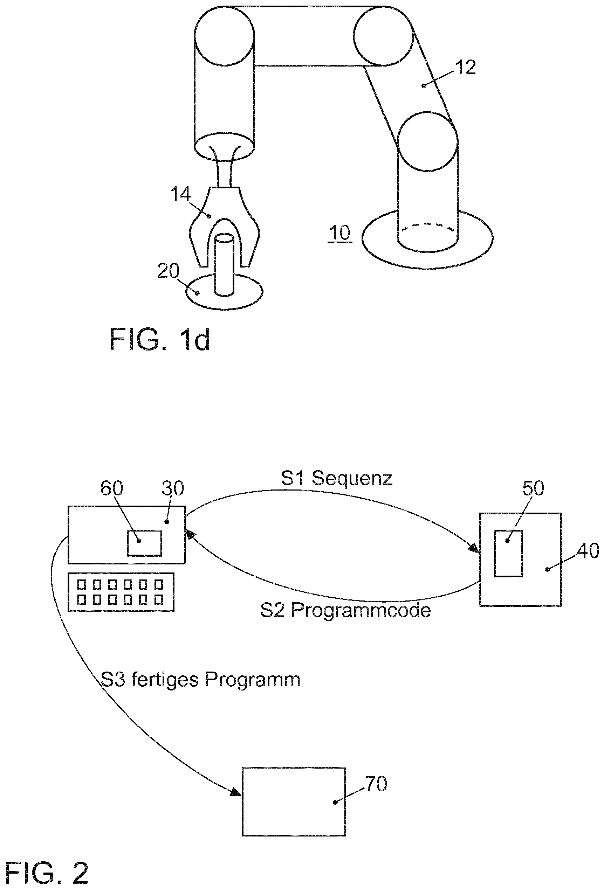

Fig. 1 zeigt eine Ansicht eines Roboters 10, der bei der Fertigung eines Produktes zum Greifen eines Bauteiles eingesetzt wird. Er dient ebenfalls dazu, das gegriffene Bauteil an eine andere Position zu verbringen, wo es entweder gehalten wird, um durch weitere Roboter an dem entstehenden Produkt montiert zu werden oder einfach nur abgelegt wird. Im zweiten Fall dient der Greif-Roboter dem Zweck der Materialzuführung. Es ist ein typischer 5-Achsen Roboterarm 12 gezeigt. An dem Roboterarm 12 ist eine Greifzange 14 angebracht. Durch Kreise sind die verschiedenen Achsen des Roboterarms 12 angedeutet. Die Anzahl der Achsen spielt für den Vorschlag keine wichtige Rolle und die Erfindung kann bei jedem Mehrachsen-Robotertyp eingesetzt werden. Derzeit sind Ein- bis Zwölfachs-Roboter auf dem Markt, die bedient werden können.

Die Programmierung des Greif-Roboters wird an einem Beispiel beschrieben. Dem Programmierer steht eine Schlüsselwortübersicht zur Verfügung. Darin sind die Schlüsselwörter und ihre Bedeutung aufgelistet. Es wird das Beispiel der Verwendung des Greif-Roboters 10 bei der Materialzuführung näher betrachtet. Seine Tätigkeit lässt sich in verschiedene Phasen unterteilen, die in Fig. 1 dargestellt sind. Zunächst wird der Roboter 10 initialisiert und dabei wird er in die Ausgangsposition verfahren. Die Ausgangsposition ist in Fig. 1a gezeigt. Die Greifzange 14 ist dabei geöffnet. Danach wird er an die Greifposition verfahren. Die Greifposition ist in Fig. 1b zu sehen. Danach muss er für das Greifen des Bauteils 16 programmiert werden. In Fig. 1c ist dargestellt, dass die Greifzange 14 entsprechend geschlossen ist. Es folgt der Vorgang des Verfahrens der Roboterposition an die Zielposition. Die Zielposition ist in Fig. 1d gezeigt. Dort wird das Bauteil 16 abgelegt. Das ist in Fig. 1e dadurch dargestellt, dass die Greifzange 14 wieder geöffnet ist. Schließlich wird der Greif-Roboter 10 wieder in die Ausgangsposition verfahren, die ja schon in Fig. 1a zu sehen ist.

Die elektrische und elektronische Ausstattung des Roboters 10 ist in der Fig. 1 nicht im Detail gezeigt. Für die Robotersteuerung ist eine programmierbare Steuerung SPS zuständig, die meistens neben dem / in der Nähe des Roboter 10 positioniert ist. In Fig. 2 ist die programmierbare Steuerung mit der Bezugszahl 70 versehen. Es ist auch möglich, dass in einem Schaltschrank gleich mehrere programmierbare Steuerungen untergebracht sind, die mehrere Roboter steuern, die dann alle an diesen Schaltschrank angeschlossen sind. Der Roboter 10 muss für die Ausübung der gewünschten Tätigkeit programmiert werden. Dies geschieht üblicherweise abseits von der programmierbaren Steuerung mit einem Bürorechner.

Fig. 2 zeigt eine Anordnung von Rechnern für die Umsetzung der automatischen Programmerstellung nach dem Konzept der Erfindung. Die Bezugszahl 30 bezeichnet den Bürorechner, an dem der Programmierer die Erstellung des Roboterprogramms kontrolliert. Auf dem Bürorechner 30 ist ein Programm-Generator 60 installiert, der zur Abarbeitung kommt. Zunächst erstellt de Programmierer mehrere Sequenzen von Schlüsselwörtern für die verschiedenen Steuerungsvorgänge. Er entnimmt die Schlüsselwörter aus einer spezifizierten Tabelle und fügt die notwendigen Parameter hinzu. Dabei entstehen mehrere Sequenzen von Schlüsselwörtern, die in einer Folge zusammengestellt werden. Der Programm-Generator 60 wertet diese Folge aus und sendet die verschiedenen Schlüsselwort-Sequenzen an einen Zentralrechner 40. Auf dem Zentralrechner 40 ist eine Datenbank 50 installiert. In dieser ist das Programmier-Regelwerk enthalten. Pro Schlüsselwort finden sich darin auch die passenden entsprechend der ProgrammierRichtlinie des Unternehmens konformen Programmcode-Abschnitte, die aus der Datenbank 50 entnommen werden und an den Bürorechner 30 zurück gesendet werden. Der Programm-Generator 60 stellt die empfangenen Codeabschnitte zum fertigen Programmcode zusammen. Der fertige Programmcode kann im Bürorechner 30 noch individuell bearbeitet werden, für eine individuelle Besonderheit. Dies führt der Programmierer manuell durch. Das fertiggestellte Programm wird an die programmierbare Steuervorrichtung 70 des Industrie-Roboters 10 übertragen.

Die Programmierung erfolgt also in drei Schritten:
Im Schritt S1 wird der Programmierer die Schlüsselwörter eingeben, die für die Programmierung geeignet sind. Dazu steht dem Programmierer eine Schlüsselwortübersicht zur Verfügung. In der Schlüsselwortübersicht sind die Schlüsselwörter für den Greifer mit ihrer Bedeutung aufgelistet.

**Extrakt aus Tabelle:**

| 6.0 Greifer | |
|---|---|
| BTK 1,... | Abfrage Bauteilkontrolle, gewöhnlich Merker |
| G_AUF 1,... | Spanngruppe AUF, mit Merker kombinierbar |
| G_ZU 1,... | Spanngruppe ZU, mit Merker |
| | |

| 32.0 Special Users | |
|---|---|
| WARTEBIS AUS,... | Wartebedingung, multipel |

Für die erste Phase der in Fig. 1 gezeigten Anwendung bzgl. der Materialzuführung wird folgende Sequenz von Schlüsselwörtern erstellt. Es handelt sich um die Initialisierungsphase:
PTP VB=100% VE=100% ACC=100% RobWzg=0 Base=0 SPSTrig=0[1/100s]
Warte auf Folgenstart
-- G_AUF 1,M2 --
-- BTK 2 --
PTP VB=100% VE=100% ACC=100% RobWzg=0 Base=0 SPSTrig=0[1/100s]
Die zweite Phase, s. Fig. 1b betrifft das Verfahren des Roboterarms 12 zur Greifposition.

Um das zu realisieren, erstellt der Programmierer die folgende Sequenz von Schlüsselwörtern:
-- Entnahmeposition --
- BTK 1 --
- G_ZU 1 --
PTP VB=100% VE=100% ACC=100% RobWzg=0 Base=0 SPSTrig=0[1/100s]

Dabei entspricht der Ausdruck "Entnahmeposition" keinem Schlüsselwort, sondern einem gewollten, bleibenden Kommentar.

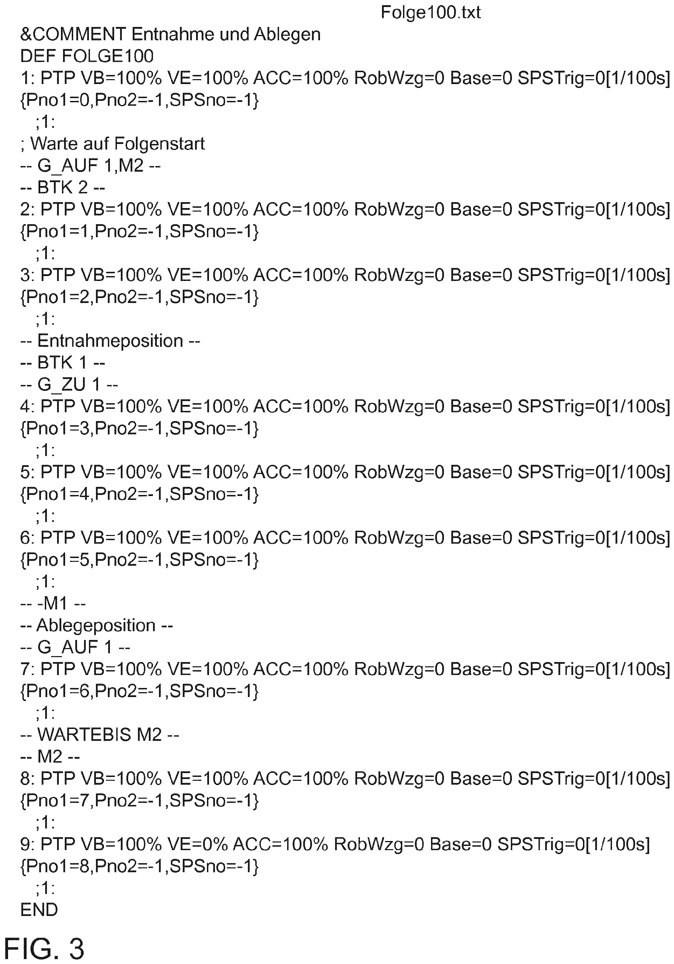

Die dritte Phase, s. Fig. 1c betrifft das Verfahren des Roboterarms 12 zur Ablegeposition. Dafür wird aber keine Schlüsselwort-Sequenzmanuell erstellt, sondern nur die entsprechende Positionsangabe gemacht, s. Sequenz 2: in Fig. 3.

2: PTP VB=100% VE=100% ACC=100% RobWzg=0 Base=0 SPSTrig=0[1/100s] {Pno1=1,Pno2=-1,SPSno=-1} ;1: Die Fahrbedingungen werden hinsichtlich maschineller Sicherheiten aus vorherigen Freigaben von der übergeordneten programmierbaren Steuerung (SPS) und eigenen Bedingungen, wie etwa Bauteilkontrollen (BTK) durch den OLP-Programmgenerator 60 in das fertige Programm eingefügt. Beispiel für die Umsetzung in Programmcode: FB PSPS = M1 & M30 & M32 & M95

In Fig. 1d ist noch die Phase für das Ablegen des gegriffenen Bauteils 20 gezeigt. Die entsprechende Sequenz von Schlüsselwörtern wird nachfolgend aufgelistet:
-- -M1 --
-- Ablegeposition --
- G_AUF 1 --
PTP VB=100% VE=100% ACC=100% RobWzg=0 Base=0 SPSTrig=0[1/100s]
-- WARTEBIS M2 --
-- M2 --
PTP VB=100% VE=100% ACC=100% RobWzg=0 Base=0 SPSTrig=0[1/100s]

Für das Anfahren der Ausgangsposition wird wiederum automatisch ein Programmteil erzeugt, ohne Schlüsselwort-Sequenz. Die Abfolgen sind immer gleich und spezifiziert. Das folgende Beispiel, hergeleitet aus Richtlinien, zeigt eine Darstellung des fertig generierten Codes für das Anfahren der Ausgangsposition:
-- Gesamt Arbeitsfertigmeldung --
PTP VB=100% VE=0% ACC=100% RobWzg=0 Base=0 SPSTrig=5[1/100s] P
FB PSPS = EIN
A23 = AUS
WARTE BIS M2
SPSMAKRO15 = EIN
WARTE BIS E23
A23= EIN
FB PSPS = M2 & M30 & M31 & M95
PTP VB=100% VE=0% ACC=100% RobWzg=0 Base=0 SPSTrig=0[1/100s] P
FB PSPS = EIN
t1 (EIN) = STOP
t2 (EIN) = t1[1/10Sek]
t2 (EIN) = STOP

Die fertigen Schlüsselwort-Sequenzen für das in Fig. 1 gezeigte Beispiel sind in Fig. 3 gezeigt. Fig. 3 zeigt ein mit Text-Editor generiertes Dokument mit dem Titel "Folge100". Insgesamt sind darin 9 Sequenzen aufgelistet. Dabei betreffen nur die Sequenzen 1:, 3:, 6: und 7: die zuvor beschriebenen vom Programmierer angelegten Schlüsselwort-Sequenzen. Die anderen Sequenzen werden vom OLP-Generator-Programm 60 automatisch hinzugefügt. Das Dokument wird als Folge bezeichnet, weil es bereits mehr enthält als die Schlüsselwort-Sequenzen. Eine Folge ist bereits ein sogenanntes Koordinaten-Programm bei der Programmierung von Robotern.

Nach dem Anlegen der Schlüsselwort-Sequenzen für die einzelnen Steuerungsphasen in Schritt S1 erfolgt dann die Umsetzung der Schlüsselwort-Sequenzen in echten Programmcode. Dabei entstehen Grundprogramme, die Programmcode in der anwendungsorientierten Programmiersprache beinhalten. Es handelt sich um SPS-Makros und SPS-Operanden, die auch aus der Programmierung von Speicherprogrammierbaren Steuerungen bekannt sind. Dies erfolgt mit Hilfe der Datenbank 50 und des Algorithmus 60 im Schritt S2

Diese Umsetzung erfolgt maschinell ohne Zutun des Programmierers. Dazu bedient sich das Umsetz-Tool einer Programmierrichtlinie, die von dem Unternehmen, das den Roboter einsetzt, erstellt wurde. Diese Richtlinie enthält die Regeln, die nach Unternehmensvorgabe für die Programmierung zu beachten sind. Das ist z.B. erforderlich zur Einhaltung von Sicherheitsbestimmungen. Es dient aber auch dazu, dass die Programme lesbar und verständlich bleiben. Bei einem großen Konzern, der Industrie-Roboter an verschiedenen Standorten einsetzt, wo auch noch unterschiedliche Sprachen gesprochen werden, ist dies ein entscheidender Punkt. Durch diese Vereinheitlichung der Programmierung können dann auch vielfältige Fehlprogrammierungen vermieden werden.

Beispiele von Regeln, die in der Programmierrichtlinie aufgeführt werden, Vorschriften für die Umfahrung von Hindernissen, Vorschriften für Stellungsfreigaben bzw. Verriegelungen, Vorschriften für Spannrückmeldungen und Teilekontrollen, Vorschriften für die Angabe von Positionen und Koordinaten, Vorschriften für Greifer, Freigaben und Merker, Vorschriften für die einzusetzenden Interpolationsarten, Vorschriften für die Programmierung von Sprungbefehlen, Vorschriften für die Angabe von Bewegungsparametern, Vorschriften und Beispiele für die Programmierung von Unterprogrammen und Makros, Vorschriften für die Programmierung von Folgen, Vorschriften für die Programmierung von Folgenwiederholungen, Vorschriften für Initialisierungsphasen, Vorschriften für Technologie-Aufrufe, Vorschriften für die Programmierung von Werkzeugwechselvorgängen, Vorschriften für die Programmierung von Arbeitsfertigmeldungen, usw.

### Beispiele:

### 2. Programmierung von Handlingaufgaben mit Spanngruppen

### 2.1 Programmierung von Punkt 2 einer Folge

**Beispiel: Greifer mit 4 Spanngruppen und 2 Bauteilkontrollen**

| | |
|---|---|
| 2: PTP VB = 100% VE = 0% ACC = 100% RobWzg=1 Base=1 SPSTrig = 0 [1/100s] | |
| 1: FB PSPS = EIN | ∼ *Online-Fahrbedingungen ausgeschaltet* |
| 2. A23 = AUS | ∼ *Schutzgitter gesperrt* |
| 3: t1 (EIN) = 0 [1/10Sek] | ∼ *Start Taktzeitmessung* |
| 4: SPS MAKRO50 = EIN | ∼ *Merker-Initialisierung* |
| 5: A80 = EIN | ∼ *Freigabe Spanner AUF*/*ZU* |
| 6: A15 = AUS | ∼ *Meldung "Grundstellung" ausschalten* |
| 7: F1 = EIN | ∼ *Vorwahl Spanngruppe 1* |
| 8: F2 = EIN | ∼ *Vorwahl Spanngruppe 2* |
| 9: F3 = EIN | ∼ *Vorwahl Spanngruppe 3* |
| 10: F4 = EIN | ∼ *Vorwahl Spanngruppe 4* |
| 11: SPS MAKRO342 = !E579 & !E580 | ∼ *Greifer AUF* |
| 12: SPS MAKRO340 = EIN | ∼ *Greifer Initialisieren* |
| 13: WARTE BIS M31 & M33 & M35 & M37 | ∼ *Abfrage Greifer ist AUF* |
| 14. WARTE BIS E23 | ∼ *Keine Zutrittsanforderung* |
| 15. A23 = EIN | ∼ *Schutzgitter gesperrt* |
| 16: FB PSPS = E14 & E24 & E80 & M31 & M33 & M35 & M37 | |

### 4.3 Programmierung letzter Punkt einer Folge

Im letzten Punkt der jeweiligen Folge ist der entsprechende Timer für die Gesamttaktzeit zu stoppen, der Wert zu sichern und ggf. Überwachungszeiten zu triggern.

**Beispiel:**

| | |
|---|---|
| 55: PTP VB=100% VE=0% ACC=100% RobWzg=1 Base=1 SPSTri=0[1/100s] | |
| 1: FB PSPS = EIN | |
| 2: t1 ( EIN) = STOP | ∼ *Gesamttaktzeit aktueller Durchlauf* |
| 3: t2 (EIN ) = t1 [1/10Sek] | |
| 4: t2 ( EIN ) = STOP | |
| | |

| Folge | |
|---|---|
| Gesamt-Arbeitsfertigmeldung | |
| W: PTP VB=100% VE=0% ACC=100% RobWzg=1 Base=1 SPSTrig=5 [1/100s] | |
| 1: FB PSPS = EIN | |
| 2: A23 = AUS | ∼ *Schutzgitter freigegeben* |
| *3: SPS MAKRO15* = *EIN* | ∼ *Gesamtarbeitsfertigmeldung* |
| 4: WARTE BIS E23 | ∼ *Fahrfreigabe von SPS* |
| 5: A23 = EIN | ∼ *Schutzgitter gesperrt* |
| 6: FB PSPS = M30 & E80 & M95 | |

Das Makro15 für die Gesamt-Arbeitsfertigmeldung darf nur am Ende in der Folge, jedoch nicht im letzten Punkt aufgerufen werden!!! Falls nötig, muss der letzte Punkt kopiert werden und als vorletzter eingefügt werden.

Die Programmierrichtlinie kann in Form einer Datenbank auf dem Bürorechner 30 oder dem Zentralrechner 40, der mit dem Bürorechner 30 über ein Netzwerk verbunden ist, realisiert werden. Das jeweilige Schlüsselwort in der Schlüsselwort-Sequenz, die umgesetzt werden soll, dient als Adressinformation unter der die relevanten Vorschriften in der Datenbank 50 zu finden sind. Die Umsetzung des Schlüsselwortes mit den optionalen Parameterangaben, geschieht dann mit den in der Datenbank 50 enthaltenen Code-Beispielen für das Schlüsselwort und den Vorschriften. Ein Algorithmus als Teil des OLP-Programmgenerators 60 der auf dem Bürorechner 30 läuft, baut die einzelnen Code-Abschnitte zu einem Programm zusammen. So entstehen durch die Umsetzung Grundprogramme die weitgehend fertig sind. Auch bestimmte Kommentarzeilen werden automatisch generiert. Sollen mehrsprachige Kommentare eingefügt werden, kann die Sprachenauswahl vor der Umsetzung in einem Menü des Umsetzer-Tools eingegeben werden.

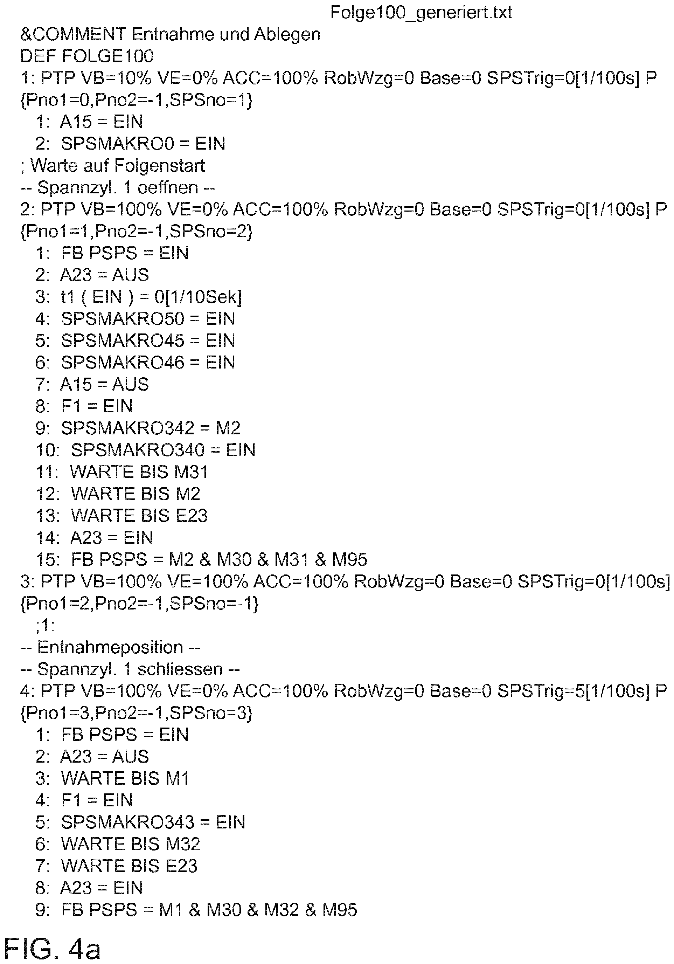

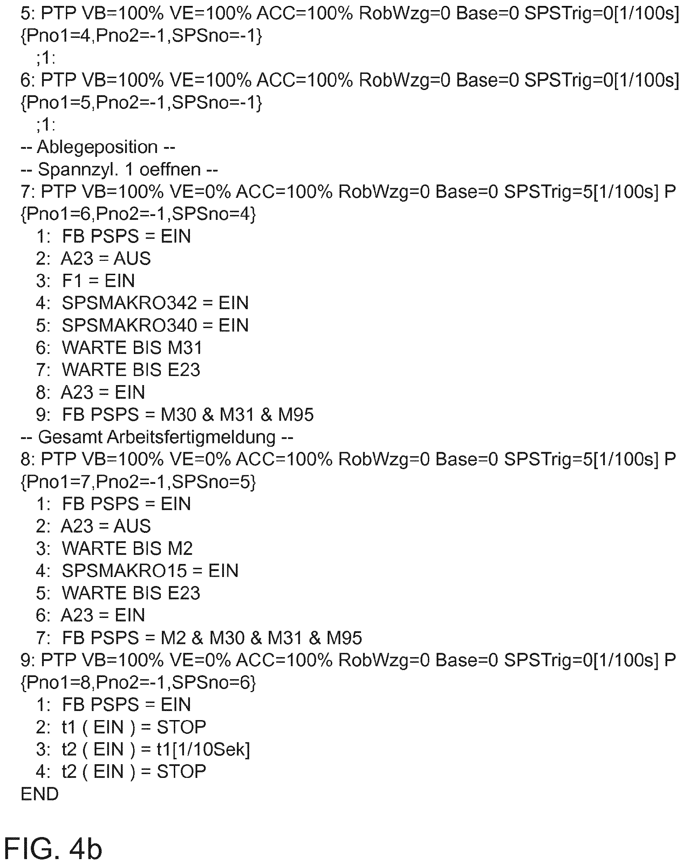

Die Fig. 4 zeigt den fertigen Programmcode für die 9 Sequenzen, die in Fig. 3 gezeigt sind.

Das Dokument, das den fertigen Programmcode zeigt, hat den Titel "Folge100_generiert". Es enthält neben dem Programmcode auch einige wichtige Kommentarzeilen.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

### Bezugszeichenliste

- 10: Roboter
- 12: Roboterarm
- 14: Greifzange
- 20: Bauteil
- 30: Bürorechner
- 40: Zentralrechner
- 50: Datenbank
- 60: Algorithmus
- 70: programmierbare Steuervorrichtung
- S1 - S3: verschiedene Schritte des Programmierverfahrens

## Patentansprüche

1. Verfahren zur Programmierung eines Roboters (10) für die Durchführung einer Tätigkeit, wobei der Roboter (10) mit einer programmierbaren Steuereinheit (70) ausgestattet ist, **dadurch gekennzeichnet, dass** die Roboter-Programme mit einem einheitlichen Programm-Generator (60) erstellt werden, wobei der Programm-Generator (60) eine oder mehrere Sequenzen von Schlüsselwörtern in gültigen Programmcode für die programmierbare Steuereinheit (70) umsetzt, derart, dass der Programm-Generator (60) bei der Umsetzung der Schlüsselwörter der jeweiligen Sequenz einen Abruf von Informationen in einem Programmier-Regelwerk durchführt von dem er den für den jeweiligen Robotertyp passenden Programmcode in der vorgegebenen Syntax zurückerhält und wobei der Programm-Generator (60) die empfangenen Programm-Code-Abschnitte zu einem fertigen Programmcode zusammensetzt.

2. Verfahren nach Anspruch 1, wobei die Schlüsselwörter wenigstens zum Teil mit Parameterangaben versehen sind.

3. Verfahren nach Anspruch 1 oder 2, wobei der Programm-Generator (60) in den Programmcode ein oder mehrere Kommentare zur Beschreibung von Funktionen einfügt.

4. Verfahren nach Anspruch 3, wobei der Programm-Generator (60) den oder die Kommentare in einer Anzahl von mehreren ausgewählten Sprachen einfügt.

5. Verfahren nach einem der vorhergehenden Ansprüche, wobei das Programmier-Regelwerk als Datenbank (50) ausgeführt wird, die entweder auf dem Rechner (30), auf dem das Programm für die Steuerung des Roboters (10) erstellt wird, gespeichert wird oder auf einem Zentralrechner (40) installiert wird, der mit dem Rechner (30) verbunden ist.

6. Verfahren nach Anspruch 5, wobei bei dem Abruf von Informationen in der Datenbank (50), das Schlüsselwort inklusive Parameterangaben falls vorhanden in einer Anfrage an die Datenbank (50) gesendet wird, das als Index-Information für den Abruf von Informationen in der Datenbank (50) dient.

7. Recheneinrichtung zur Durchführung von Schritten des Verfahrens nach einem der vorhergehenden Ansprüche, **dadurch gekennzeichnet, dass** die Recheneinrichtung (30) eine Recheneinheit mit Anschluss an ein Programmier-Regelwerk aufweist, das als Datenbank (50) ausgeführt ist, wobei die Recheneinrichtung (30) eingerichtet ist, eine Sequenz von Schlüsselwörtern, die einen Steuervorgang beschreibt, an die Datenbank (50) zu senden, und von der Datenbank (50) den gültigen Programmcode für die Sequenz von Schlüsselwörtern zurückzuerhalten.

8. Recheneinrichtung nach Anspruch 7, wobei die Datenbank (50) in der Recheneinrichtung (30) installiert ist.

9. Recheneinrichtung nach Anspruch 8, wobei die Recheneinrichtung (30) eingerichtet ist mit einem externen Zentralrechner (40) zu kommunizieren, auf dem die Datenbank (50) installiert ist.

10. Computerprogramm, **dadurch gekennzeichnet, dass** das Computerprogramm ausgelegt ist, bei Abarbeitung in einer Recheneinrichtung (30) die Schritte des Verfahrens nach einem der Ansprüche 1 bis 6 durchzuführen.
